# EUROPÄISCHE PATENTSCHRIFT

(11) **EP 3 152 530 B1**
(45) Veröffentlichungstag und Bekanntmachung des Hinweises auf die Patenterteilung: **15.04.2020**
(21) Anmeldenummer: 15725605.8
(22) Anmeldetag: 27.05.2015
(51) Int. Cl.: G01F 23/00, G01F 23/24, G01F 23/26

(54) **VERFAHREN UND VORRICHTUNG ZUR ÜBERWACHUNG DES FÜLLSTANDES EINES MEDIUMS IN EINEM BEHÄLTER**
METHOD AND DEVICE FOR MONITORING THE LEVEL OF A MEDIUM IN A CONTAINER
PROCÉDÉ ET DISPOSITIF DE SURVEILLANCE DU NIVEAU D'UN MILIEU DANS UN RÉCIPIENT

(30) Priorität: 05.06.2014 DE 102014107927
(43) Veröffentlichungstag der Anmeldung: 12.04.2017
(73) Patentinhaber: Endress+Hauser SE+Co. KG, 79689 Maulburg (DE)
(72) Erfinder: WERNET, Armin, 79618 Rheinfelden (DE); BECHTEL, Gerd, 79585 Steinen (DE); UPPENKAMP, Kaj, 79664 Wehr (DE)
(74) Vertreter: Andres, Angelika Maria
(86) Internationale Anmeldenummer: PCT/EP2015/061652
(87) Internationale Veröffentlichungsnummer: WO 2015/185401

(56) Entgegenhaltungen:
- EP-A1- 1 067 368
- EP-A1- 2 031 358
- DE-A1-102007 049 526
- US-A- 4 147 050

## Beschreibung

Die Erfindung betrifft ein Verfahren und eine Vorrichtung zur Überwachung eines vorgegebenen Füllstandes eines Mediums in einem Behälter.

Ein vorgegebener Füllstand kann beispielsweise mittels des konduktiven Messverfahrens überwacht werden. Das zugrundeliegende Messprinzip ist aus einer Vielzahl von Veröffentlichungen bekannt. Der Füllstand wird überwacht, indem erkannt wird, ob über das leitfähige Medium ein elektrischer Kontakt zwischen einer Sensorelektrode und der Wandung eines leitfähigen Behälters oder einer zweiten Elektrode besteht. Entsprechende Feldgeräte werden von der Anmelderin beispielsweise unter der Bezeichnung Liquipoint vertrieben.

Die Füllstanddetektion mittels eines konduktiven Messverfahrens stößt an seine Grenzen, wenn das zu überwachende Medium quasi keine elektrische Leitfähigkeit (< 0,5µS/cm) oder nur eine sehr geringe Leitfähigkeit aufweist. Eine Änderung der Leitfähigkeit des Mediums im Verhältnis zur Leitfähigkeit von Luft ist dann zu gering, um noch sicher von der Messelektronik erfasst werden zu können. Bei diesen mit einem konduktiven Messverfahren schwer zu überwachenden Medien handelt es sich z.B. um destilliertes Wasser, Melasse oder Alkohole. Weiterhin problematisch sind Medien mit einer elektrischen Leitfähigkeit kleiner 1µS/cm und einer Dielektrizitätskonstanten kleiner 20. In diesen Bereich fallen insbesondere Öle und Fette.

Hier eignet sich das kapazitive Messverfahren, welches ebenfalls im Stand der Technik bekannt ist. Dabei wird der Füllstand des Mediums aus der Kapazität des von einer Sondenelektrode und der Wandung des Behälters oder einer zweiten Elektrode gebildeten Kondensators ermittelt. Je nach Leitfähigkeit des Mediums bildet hierbei entweder das Medium selbst oder eine Sondenisolierung das Dielektrikum des Kondensators. Auch auf dem kapazitiven Messprinzip beruhende Feldgeräte werden von der Anmeldung in vielen unterschiedlichen Ausgestaltungen vertrieben, beispielsweise unter der Bezeichnung Liquicap oder Solicap.
Die Füllstandsdetektion mittels eines kapazitiven Messverfahrens ist zwar prinzipiell für leitfähige und nicht leitfähige Medien möglich, jedoch wird für Medien mit einer elektrischen Leitfähigkeit >50µS/cm eine Isolation der Messsonde notwendig. Die Impedanz dieser Isolierung ist wiederum für anhaftende Medien nachteilig.

Zur Vermeidung von Ansatzbildung ist aus der DE 32 12 434 C2 die Verwendung eine Guardelektrode bekannt geworden, welche die Sensorelektrode koaxial umgibt und auf dem gleichen elektrischen Potential wie diese liegt. Je nach Beschaffenheit des Ansatzes zeigt sich bei dieser Ausgestaltung das Problem, das Guardsignal passend zu erzeugen.

Erweiternd wird in der DE 10 2006 047 780 A1 eine Füllstandsmesssonde beschrieben, die über einen großen Messbereich hinweg unempfindlich ist gegenüber Ansatzbildung ist. Gemäß der bekannten Lösung sind eine Verstärkungseinheit und ein Begrenzungselement vorgesehen, wobei das Begrenzungselement zwischen dem Ausgang der Verstärkungseinheit und der Guardelektrode angeordnet ist. Die Guardelektrode wird über die Verstärkungseinheit und das Begrenzungselement, bei dem es sich z.B. um einen Ohm'schen Widerstand handelt, mit einem Guardsignal beaufschlagt. Analog wird die Sensorelektrode mit dem Ansteuersignal beaufschlagt. Eine Auswerteeinheit überwacht ausgehend von dem an der Sensorelektrode abgreifbaren Stromsignal und dem Ansteuersignal und/oder dem Guardsignal den Füllstand. Die Verstärkungseinheit, welche das Guardsignal erzeugt, wird durch das Begrenzungselement beschränkt. Das in seiner Amplitude beschränkte Signal wird als Anregungssignal auf die Sensorelektrode gegeben. Von der Sensorelektrode wird anschließend ein Stromsignal abgegriffen, welches in Verbindung mit dem Ansteuersignal oder dem Guardsignal zwecks Überwachung des Füllstands herangezogen wird.

Die DE 10 2007 049526 A1 beschreibt ein Verfahren und eine Vorrichtung zur Überwachung eines vorgegebenen Füllstandes mit einer Messsonde, bei welcher entweder ein kapazitiver Betriebsmodus oder ein konduktiver Betriebsmodus im Messbetrieb eingesetzt wird.

Aus der DE 10 2008 043 412 A1 ist schließlich ein Füllstandsgrenzschalter mit einer Speichereinheit bekannt geworden, wobei in der Speichereinheit Grenzwerte für unterschiedliche in einem Behälter befindliche Medien abgelegt sind. Bei Über- oder Unterschreiten des auf das Medium abgestimmten Grenzwertes wird ein Schaltsignal erzeugt. Insbesondere lässt sich der Grenzwert für den Messwert in Bezug auf das in dem Behälter befindliche Medium so festlegen, dass eine Ansatzbildung das zuverlässige Schalten nicht beeinflusst. Da Ansatzbildung das Messsignal verfälscht und somit eine falsche Prozessgröße vorspiegelt, ist der Grenzwert (der den Schaltpunkt bestimmt) vorzugsweise so gelegt, dass er außerhalb des Bereichs für das Messsignal liegt, welcher durch den Ansatz erreichbar ist. Die Vorrichtung kann hierbei als kapazitives oder als konduktives Füllstandsmessgerät ausgebildet sein. Da sich die Vorrichtung automatisch auf wechselnde Medien (z.B. auch im Rahmen von Reinigungsvorgängen wie CIP- und SIP Prozessen) im Behälter einstellen kann, indem der optimale Schaltpunkt aus den erfassten Mediumseigenschaften ermittelt bzw. berechnet wird, können aufwändige Abgleichsvorgänge, die üblicherweise bei einem Wechsel des Mediums notwendig sind, entfallen. Es wäre wünschenswert, wenn der Füllstand eines Mediums in einem Behälter mit einem Messgerät unabhängig von den elektrischen Eigenschaften des Mediums überwachbar wäre. Da die Vor- und Nachteile des kapazitiven und konduktiven Messverfahrens gegenläufig sind, bietet sich ein Multisensor, welcher mittels beider Verfahren den Füllstand überwachen kann, an. Dieser Multisensor zeichnet sich dadurch aus, dass er erlaubt, abwechselnd in einem kapazitiven und einem konduktiven Betriebsmodus zu arbeiten. Dabei kann zusätzlich eine Guardelektrode zur Vermeidung von Ansatzbildung vorgesehen werden.

Hinsichtlich einer konkreten Konstruktion eines solchen Feldgeräts sind verschiedene Möglichkeiten denkbar. Beispielsweise kann eine Messsonde mit zwei Elektronikeinheiten vorgesehen werden, eine für den kapazitiven und eine für den konduktiven Betriebsmodus. Um zwischen beiden Modi hin und herschalten zu können, können beispielsweise zusätzlich elektrische Schalter eingebaut werden. Dieses einfach zu realisierende Beispiel weist allerdings den Nachteil auf, dass die Schalter aufgrund von parasitären Kapazitiven die erreichbare Messauflösung begrenzen, was insbesondere in Bezug auf den kapazitiven Betriebsmodus von Nachteil sein kann.
Die erreichbare Messauflösung im kapazitiven Betriebsmodus hängt von der speziellen geometrischen Ausgestaltung der Messsonde sowie von den für die jeweilige Elektronikeinheit verwendeten Komponenten ab. Es versteht sich von selbst, dass die gemessenen Kapazitäten darüber hinaus unter anderem von den Mediumseigenschaften abhängen, jedoch betrifft diese Abhängigkeit die jeweils aktuelle Anwendung, während die Geometrie der Messsonde sowie die Komponenten der Elektronikeinheit eine konstante Beeinflussung darstellen.
Der wichtigste Punkt ist gegeben durch die geometrische Ausgestaltung der Messsonde, da durch diese der Bereich der gemessenen Kapazitäten festgelegt wird.
Wenn die Messsonde beispielsweise so ausgestaltet ist, dass sie nach Einbau in der Wandung des Behälters mit dieser abschließt, wie bei der von der Anmelderin unter dem Namen FTW33 vertriebenen Variante, können die gemessenen Kapazitäten im Bereich von Femtofarad liegen. Ragt die Messsonde dagegen zumindest teilweise in den Behälter hinein, so liegen die Messwerte für die Kapazität bis zu mehrere Größenordnungen darüber.
Insbesondere eine Auswertung von Kapazitäten im Bereich von Femtofarad stellt höchste Anforderungen an die verwendete Elektronikeinheit.
Der Erfindung liegt deshalb die Aufgabe zugrunde, ein Verfahren und eine Vorrichtung bereitzustellen, mit welcher ein vorgegebener Füllstand eines Mediums in einem Behälter unabhängig von den elektrischen Eigenschaften des Mediums überwacht werden kann, und gleichzeitig eine hohe Messauflösung, bis hin zu Femtofarad, gewährleistet ist.
Diese Aufgabe wird erfindungsgemäß gelöst durch ein Verfahren zur Überwachung eines vorgegebenen Füllstandes eines Mediums in einem Behälter gemäß dem vorliegenden unabhängigen Patentanspruch 1.

Auf diese Weise kann die Messsonde mittels einer einzigen Elektronikeinheit betrieben werden, welche sowohl für einen kapazitiven als auch für einen konduktiven Betriebsmodus ausgelegt ist. Dabei wird der konduktive Betriebsmodus bei leitfähigen Medien eingesetzt, während der kapazitive Betriebsmodus bei nicht oder schlecht leitfähigen Medien Anwendung findet. Der Vorteil des konduktiven Betriebsmodus für Medien hoher elektrischer Leitfähigkeit (>5µS/cm) ist darin zu sehen, dass die Messsonde eine direkte Anbindung an das Medium hat, so dass keine weitere Isolation notwendig ist.

Das Zusammenführen einer kapazitiven und konduktiven Messung in einer einzigen Elektronikeinheit sorgt darüber hinaus dafür, dass keine elektrischen Schalter verwendet werden müssen. Dies wiederum erhöht die erreichbare Messauflösung, da die Verwendung elektrische Schalter das Auftreten parasitärer Kapazitäten hervorrufen würde.

Erfindungsgemäß wird für das Erregersignal im ersten Zeitintervall ein Rechtecksignal verwendet und im zweiten Zeitintervall ein Dreiecksignal. Das Rechtecksignal wird dann zur Betreibung der Messsonde im konduktiven Betriebsmodus verwendet und das Dreiecksignal für den kapazitiven Betriebsmodus. Ein Dreiecksignal ist technisch einfach zu erzeugen. Es ist außerdem von Vorteil, wenn das Rechtecksignal und das Dreiecksignal so dimensioniert bzw. ausgelegt werden, dass sie denselben arithmetischen Mittelwert aufweisen. Auf diese Weise entstehen durch die unterschiedlichen Erregersignale keine Offsetunterschiede bei der Ansteuerung der Messsonde.
In einer weiteren bevorzugten Ausgestaltung wird aus mindestens einem Antwortsignal mindestens eine medienspezifische Eigenschaft, insbesondere die elektrische Leitfähigkeit oder Dielektrizitätskonstante, ermittelt. Somit lässt sich neben dem vorgegebenen Füllstand auch eine Prozess- und/oder Mediumsüberwachung vornehmen. Selbstverständlich muss hierfür die Messsonde zumindest teilweise von Medium bedeckt sein. Beispielsweise können Prozessfenster definiert werden, in welchen Veränderungen der elektrischen Leitfähigkeit detektiert werden, oder im Falle von nicht leitfähigen Medien kann die Dielektrizitätskonstante überwacht werden.

Durch die Möglichkeit einer zusätzlichen Mediumsüberwachung ist es ferner möglich, dass der Messsonde Information zugeordnet wird, die die Antwortsignale oder aus diesen abgleite Größen in eine funktionale Beziehung zu zumindest einer medienspezifischen Eigenschaft des Mediums setzt. Durch die funktionale Beziehung wiederum können Schaltpunkte definiert werden, die dem Überschreiten und/oder dem Unterschreiten des vorgegebenen Füllstands entsprechen. Vorzugsweise wird das Antwortsignal bzw. der zugeordnete Schaltpunkt in Abhängigkeit von der ermittelten medienspezifischen Eigenschaft im konduktiven Betriebsmodus und/oder im kapazitiven Betriebsmodus bereitgestellt.
Um den Messbetrieb automatisch und ohne Intervention des Bedienpersonals ablaufen zu lassen, wird bevorzugt so vorgegangen, dass zuerst im konduktiven Betriebsmodus die medienspezifische Eigenschaft ermittelt wird. Anschließend wird anhand der ermittelten Medieneigenschaft und der funktionalen Beziehung der zugehörige Schaltpunkt bestimmt. Als medienspezifische Eigenschaft werden bevorzugt die elektrische Leitfähigkeit mit L = 1/R, wobei R der Ohm'sche Widerstand des Mediums ist, oder die Dielektrizitätskonstante verwendet.
In einer besonders bevorzugten Ausgestaltung werden bei nicht oder geringfügig elektrisch leitfähigen Medien die während der Verwendung des kapazitiven Betriebsmodus aufgenommen Antwortsignale ausgewertet. Bei elektrisch leitfähigen Medien werden die während der Verwendung des konduktiven Betriebsmodus aufgenommenen Messsignale ausgewertet, und für Medien mit einer Leitfähigkeit innerhalb eines Übergangsbereiches werden die Antwortsignale beider Betriebsmodi ausgewertet werden, wobei die aus den Antwortsignalen gewonnenen Messwerte in Abhängigkeit von der Leitfähigkeit des Mediums mit entsprechenden Gewichtungsfaktoren versehen werden. Solch ein Verfahren ermöglicht einen stufenlosen Übergang zwischen leitfähigen- und nichtleitfähigen Medien. Außerdem ermöglicht es die Detektion von eventueller Bildung von Ansatz an der Messsonde.
Es versteht sich von selbst, dass bei einem hoch leitfähigen Medium der Füllstand nicht im kapazitiven Betriebsmodus bestimmt werden muss, da diese Messung keine Zusatzinformation bereitstellt. Ebenfalls muss für geringfügig oder nicht leitfähige Medien keine Messung im konduktiven Betriebsmodus vorgenommen werden, allerdings wird der Messwert der konduktiven Messung für die Guardspannung verwendet um einen Aufschluss über die Leitfähigkeit des Mediums zu erhalten.
Die erfindungsgemäße Aufgabe wird außerdem gelöst durch eine Vorrichtung zur Überwachung eines vorgegebenen Füllstandes eines Mediums in einem Behälter gemäß dem vorliegenden unabhängigen Patentanspruch 5.

Die erfindungsgemäße Vorrichtung umfasst somit eine zur Durchführung des Verfahrens nach Anspruch 1 ausgestaltete Elektronikeinheit.
Dabei ist es von Vorteil, wenn ein Modul zur Generierung eines Rechtecksignals und ein Modul zur Generierung eines Dreiecksignals vorgesehen ist.

Erfindungsgemäß ist die Messsonde aus einer Sensorelektrode und einer Guardelektrode zusammengesetzt. Durch die Guardelektrode kann der Einfluss von Ansatz an der Messsonde eliminiert oder kompensiert werden.

Um eine hohe Messauflösung erreichen zu können, muss die Elektronikeinheit speziell ausgelegt sein und mit bestimmten Komponenten versehen werden, welche eine kapazitätsarme Ansteuerung der Messsonde sowie eine kapazitätsarme Auswertung der Messsignale ermöglichen.

Für die Auswertung im konduktiven Betriebsmodus ist es von Vorteil, wenn ein Messwiderstand vorgesehen ist, über den erfindungsgemäß das Verhältnis aus dem Strom durch die Sondenelektrode und dem Strom durch die Guardelektrode bestimmt wird. Ferner ist es für den konduktiven Betriebsmodus von Vorteil, wenn für die Generierung des diesem entsprechenden ersten Teilsignals mindestens ein Spannungsteiler vorgesehen ist.

Für die Auswertung im kapazitiven Betriebsmodus wiederum ist es von Vorteil, wenn mindestens ein Differenzverstärker vorgesehen ist, mit dem erfindungsgemäß im kapazitiven Betriebsmodus über den Messwiderstand die Differenz der Spannungen an der Sondenelektrode und der Guardelektrode bestimmt wird.

In einer bevorzugten Ausgestaltung ist zumindest ein Operationsverstärker, insbesondere der, durch den das im kapazitiven Betriebsmodus gemessene Antwortsignal geführt ist, mit einem Eingang mit einer geringen Eingangskapazität vorgesehen.

Außerdem ist es von Vorteil, wenn eine ESD-Schutzschaltung vorgesehen ist, welche zumindest eine Diode und einen Ableitwiderstand umfasst, wobei die ESD-Schutzschaltung so ausgestaltet ist, dass die mindestens eine Diode und der mindestens eine Ableitwiderstand mit der Guarelektrode und über die Guardelektrode mit der Masseverbindung verbunden sind.

In einer anderen bevorzugten Ausgestaltung ist mindestens eine in der Elektronikeinheit verbaute Leiterplatte mit der Guardspannung geschirmt.

Durch diese Maßnahmen wird gewährleistet, dass die Ansteuerung und Auswertung innerhalb der Elektronikeinheit kapazitätsarm erfolgt, was die Messauflösung deutlich erhöht.

Schließlich ist in einer bevorzugten Ausführung die Messsonde so ausgestaltet, dass sie nach dem Einbau in der Wandung des Behälters mit diesem abschließt oder zumindest teilweise in den Behälter hineinragt. Insbesondere bei einer geometrischen Ausgestaltung, bei welcher die Messsonde mit der Wandung des Behälters abschließt, liegen die im kapazitiven Betriebsmodus gemessenen Kapazitäten im Bereich von Femtofarad. In diesem Fall ist eine hohe Messauflösung, wie sie durch die vorliegende Erfindung gewährleistet wird, unumgänglich. Es versteht sich jedoch von selbst, dass auch andere geometrische Ausgestaltungen, bei welchen die Messsonde beispielsweise zumindest teilweise in den Behälter hineinragt, unter die Erfindung fallen. Bei letzteren erhöht die Anwendung einer erfindungsgemäßen Lösung auch die Messgenauigkeit des Feldgeräts.

Die Erfindung wird anhand der nachfolgenden Figuren Fig. 1 bis Fig. 7 genauer beschrieben.
Fig. 1 zeigt eine schematische Darstellung einer erfindungsgemäßen Messelektrode, angeordnet in einem teilweise mit Medium gefüllten Behälter,
Fig. 2 zeigt ein Blockdiagramm der erdfindungsgemäßen Elektronikeinheit,
Fig. 3 veranschaulicht die Erzeugung des Teilsignals im konduktiven Betriebsmodus
   a) Skizze zweier erfindungsgemäßer Spannungsteiler,
   b) Rechtecksignale für den konduktiven Betriebsmodus als Funktion der Zeit,
   c) Resultierendes Rechtecksignal mit DC-Offsetspannung
Fig. 4 veranschaulicht die Erzeugung des Teilsignals im kapazitiven Betriebsmodus
   a) Skizze eines Integrationsverstärkers,
   b) Ausgangssignal aus dem dritten Port-Ausgang des Mikrocontrollers,
   c) Dreiecksignal als Funktion der Zeit,
Fig. 5 zeigt das aus den Teilsignalen zusammengesetzte Erregersignal als Funktion der Zeit,
Fig. 6 skizziert das Verfahren der Gewichtung der Messwerte im Übergangsbereich, und
Fig. 7 eine ESD-Schutzschaltung
   a) Gemäß dem Stand der Technik,
   b) in einer erfindungsgemäßen Ausführung.

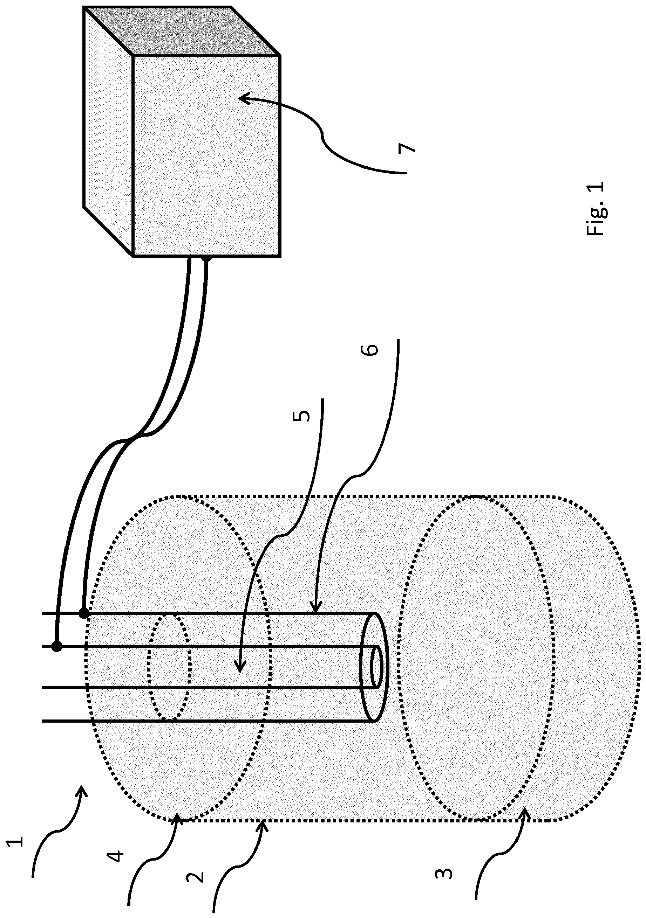

In Fig. 1 ist eine typische Konstruktion für eine Messsonde 1 gezeigt, mittels welcher ein vorgegebener Füllstand im kapazitiven oder konduktiven Messverfahren überwacht werden kann. Die Messsonde 1 ist in einem Behälter 2 angeordnet, welcher zumindest teilweise mit einem Medium 3 gefüllt ist. In diesem Fall ragt sie von der Oberseite des Behälters in diesen hinein. Es versteht sich jedoch von selbst, dass die Messsonde 1 auch mit der Bewandung des Behälters 4 abschließen kann. Insbesondere im Falle von Rohren oder Behältern mit kleinen Querschnitten ist eine solche Anordnung eventuell von Vorteil. Die Messsonde 1 selbst setzt sich im vorliegenden Beispiel aus einer Messelektrode 5 und einer Guardelektrode 6 zusammen, welche der Vermeidung von Bildung von Ansatz dient. Die Messsonde ist außerhalb des Behälters mit einer Elektronikeinheit 7 verbunden, welche zur Signalerfassung, -auswertung und/oder - speisung verantwortlich ist. Insbesondere ermittelt die Elektronikeinheit anhand der im kapazitiven und konduktiven Betriebsmodus erzeugten Antwortsignale, ob der vorgegebene Füllstand des Mediums 3 in dem Behälter 2 über und/oder unterschritten ist, und generiert eine entsprechende Meldung, bzw. löst einen entsprechenden Schaltvorgang aus.

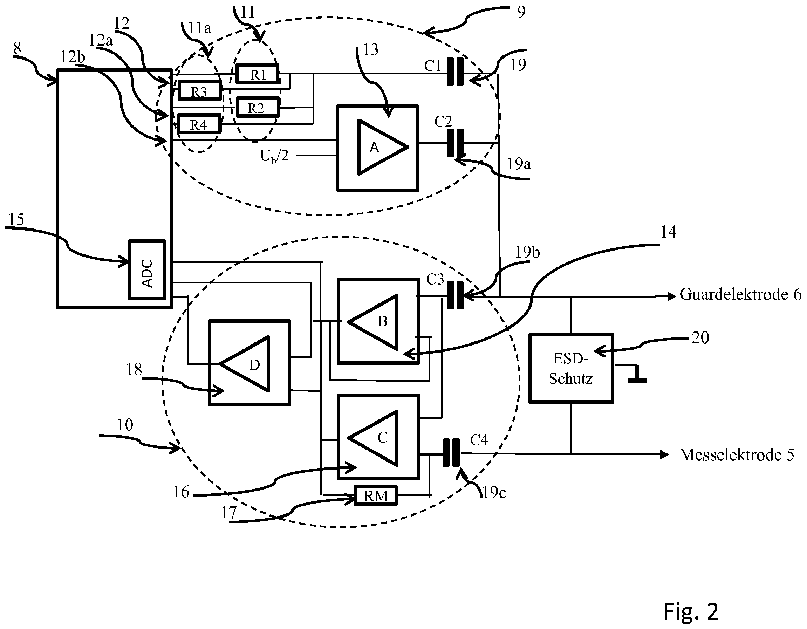

In Fig. 2 ist ein Blockdiagramm einer erfindungsgemäßen Elektronikeinheit gezeigt, mittels welcher die Messsonde sowohl im kapazitiven als auch im konduktiven Betriebsmodus betrieben werden kann. Als Ausgangspunkt ist ein Mikrocontroller 8 dargestellt, wie er in einer Vielfalt von Elektronikeinheiten für Feldgeräte zu finden ist.
Die Elektronikeinheit gliedert sich in einen Bereich zur Erzeugung des Erregersignals 9 und in einen Bereich zur Auswertung der von den jeweiligen Teilsignalen abhängigen Antwortsignale 10.

Zur Erzeugung eines Rechtecksignals für den konduktiven Betriebsmodus sind zwei Spannungsteiler 11,11a, ein niedrigohmig dimensionierter Spannungsteiler (R1/R2) 11 für hochleitfähige Medien und ein hochohmig dimensionierter (R3/R4) 11a für geringfügig leitfähige Medien. Die Taktung dieser beiden Spannungsteiler 11,11a erfolgt über entsprechende Port-Ausgänge 12,12a des Mikrocontrollers 8. Über einen weiteren Port-Ausgang des Mikocontrollers 12b wird in dem hier gezeigten Beispiel als kapazitives Erregersignal über einen Integrationsverstärker (Block A) 13 eine Dreieckspannung generiert.

Der Bereich zur Auswertung der von den jeweiligen Teilsignalen abhängigen Antwortsignale 10 umfasst die Blöcke B bis D, welche alle drei Operationsverstärker umfassen. Um den Einfluss parasitäre Effekte durch den Sondenaufbau und den durch Ansatzbildung an der Messsonde zu minimieren wird die Guardtechnik gemäß der DE00102008043412A1 angewendet.

Block B 14 ist gegeben durch einen nichtinvertierenden Verstärker, der das Referenzsignal, in diesem Falle die Guardspannung, an den Analog-Digital-Wandler (ADC) 15 des Mikrocontrollers 8 zur Verfügung zu stellen. B 14 kann ebenfalls dazu verwendet werden, mindestens eine Leiterplatte zu schirmen. Auch Block C 16 umfasst einen nicht-invertierenden Verstärker, welcher dafür verantwortlich ist, das Antwortsignal an den ADC 15 zu liefern. Daneben ist ein Messwiderstand 17 vorgesehen, mit welchem die Differenz der Spannungen an der Sondenelektrode und der Guardelektrode bestimmt wird.

Zur Auswertung des aus der kapazitiven Messung gewonnen Antwortsignals wird zusätzlich Block D 18 benötigt, welcher einen Differenzverstärker umfasst und dafür verantwortlich, die beiden Antwortsignale von der Mess- und Guardelektrode zu subtrahieren und zu verstärken. Dies geschieht über den Messwiderstand 17. Die Differenz ist dann direkt proportional zur Kapazität an der Sonde, und durch Anwendung eines erfindungsgemäßen Verfahrens und einer erfindungsgemäßen Vorrichtung wird eine Messauflösung von wenigen Femtofarad möglich.

Darüber hinaus sind vier Entkoppelungskondensatoren 19,19a,19b,19c zu sehen, welche die Gleichspannungsteile aus den jeweiligen Signalen filtern. Schließlich ist noch die ESD-Schutzschaltung 20 gezeigt, sowie die im Behälter 2 angeordnete Messsonde 1, zusammengesetzt aus der Messelektrode 5 und der Guardelektrode, und ihre Verbindung zur Elektronikeinheit.

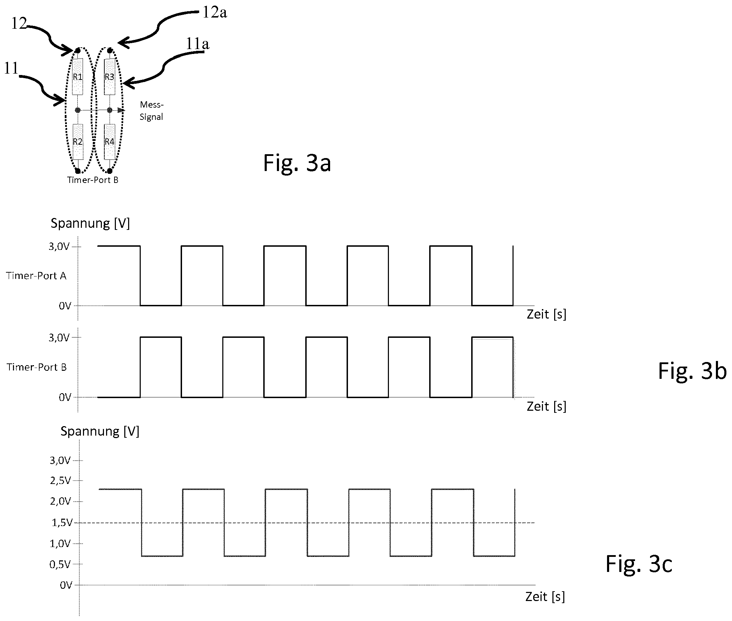

In Fig. 3 ist die Erzeugung des Teilsignals für den konduktiven Betriebsmodus skizziert. Fig. 3a gibt eine Detailansicht der beiden erfindungsgemäßen Spannungsteiler 11,11a und deren Anschluss an zwei Port-Ausgänge (A und B) 12,12a des Mikrocontrollers 8.Während ein Messbereich aktiv ist, wird der jeweils andere Messbereich abgekoppelt, indem der entsprechende Port-Ausgang A oder B mit den jeweiligen Pins auf den sogenannten Tri-State geschaltet wird. Deswegen ergeben sich die in Fig. 3b gezeigten Verläufe für das Erregersignal als Funktion der Zeit. Da das Messsystem vorzugsweise mit einer Betriebsspannung (U_{b}) versorgt wird und vorgesehen ist, die Signalerfassung über den Mikrocontroller 8 mittels eines ADC 18 durchzuführen, ist es vorteilhaft, die Wechselspannungssignale auf halbem Betriebsspannungspegel zu halten. Dies ist für das Beispiel einer Betriebsspannung von 3V_{dc} in Fig. 3c gezeigt.

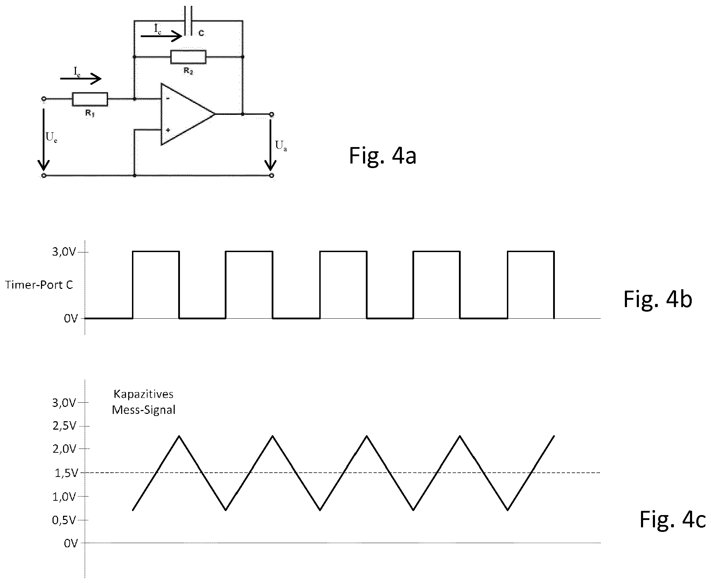

Fig. 4 skizziert in analoger Weise die Erzeugung des Teilsignals für den kapazitiven Betriebsmodus. Dabei zeigt Fig. 4a einen Integrationsverstärker wie in Block A 14 verwendet. Das rechteckförmige Ausgangssignal vom Mikrocontroller 8 ist in Fig. 4b gezeigt. Durch den Integrationsverstärker 14 wird es in ein Dreiecksignal gewandelt, welches in Fig. 4c gezeigt ist, auch wieder als Funktion der Zeit. Die Bezugsspannung am positiven Eingang des Integrationsverstärkers 14 muss dabei auf 50% der Betriebsspannung des Mikrocontrollers 8 gelegt werden, damit durch die unterschiedlichen Ansteuerungen der Sensorik keine Offsetunterschiede entstehen. Es versteht sich von selbst, dass analog zu den beiden Messbereichen für den konduktiven Betriebsmodus während des kapazitiven Betriebsmodus die beiden Portausgänge A und B mit den jeweiligen Pins auf den Tri-State geschaltet sind, und umgekehrt.

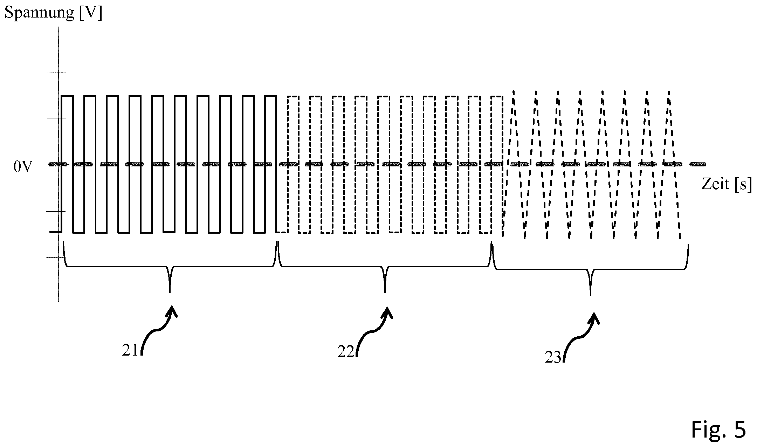

Fig. 5 zeigt schließlich das aus den beiden Teilsignalen zusammengesetzte Erregersignal als Funktion der Zeit. Die Messwerterfassung des kapazitiven und konduktiven Betriebsmodus erfolgt sequenziell. In dem hier gezeigten Beispiel wird in einem ersten Teilintervall ein erstes konduktives Teilsignal 21 erzeugt, in einem zweiten Teilintervall ein zweites konduktives Teilsignal 22 und in einem dritten Teilintervall schließlich ein kapazitives Teilsignal 23, hier gegebenen durch ein Dreiecksignal. Das Auftreten zweier konduktiver Teilsignale 21,22 ist bedingt durch die Verwendung zweier Spannungsteiler für stark bzw. schwach leitfähige Medien.

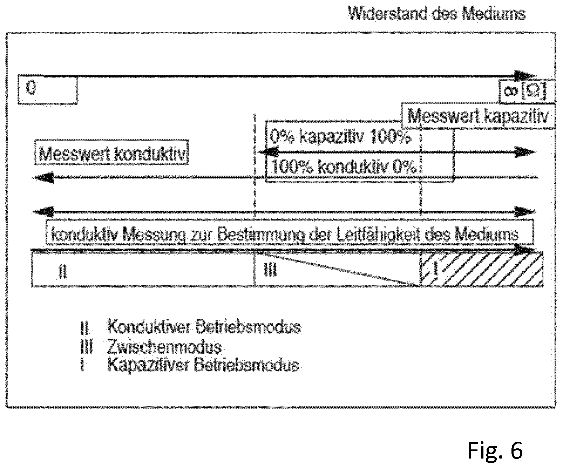

Fig. 6 skizziert das Verfahren gemäß Anspruch 5, welche für Medien mit elektrischen Leitfähigkeiten aus einem Übergangsbereich zwischen nicht-leitfähig und leitfähig die im kapazitiven und konduktiven Betriebsmodus gemessenen Antwortsignale mittelt und gewichtet. Dieses Verfahren ist in der nicht vorveröffentlichten DE102013102055.0, angemeldet am 01.03.2013 beschrieben. Dabei wird zwischen 3 Bereichen unterschieden: Bei nicht leitfähigen Medien oder Medien mit einer geringen Leitfähigkeit (I) werden die Antwortsignale der kapazitiven Messung ausgewertet. Dabei liegt der bevorzugte Widerstandsbereichs bevorzugt bei 300kΩ bis unendlich. Bei Medien mit einer hohen elektrischen Leitfähigkeit (II) werden die im konduktiven Betriebsmodus erzeugten Antwortsignale ausgewertet, wobei hier noch über die beiden Spannungsteiler eine weitere Untergliederung erfolgt. In einem Übergangsbereich (iii) zwischen diesen beiden Bereichen I und II werden die im konduktiven und kapazitiven Betriebsmodus ermittelten Antwortsignale ausgewertet. Dazu werden die beiden jeweiligen Antwortsignale in Abhängigkeit von der Leitfähigkeit des Mediums mit geeigneten Gewichtungsfaktoren versehen, die beispielsweise zwischen 0% und 100% liegen können und gegenläufig sind. Dieser Übergangsbereich III entspricht vorzugsweise einem Widerstandsbereich von 300-3000 kΩ.

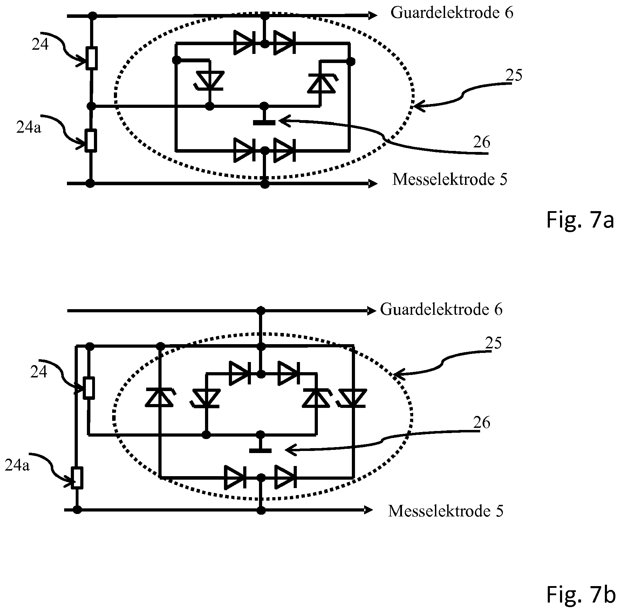

Schließlich beschäftigt sich Fig. 7 mit der ESD-Schutzschaltung 20. Fig. 18a zeigt hierzu eine Schaltung gemäß Stand der Technik. Zu sehen sind zwei Ableitwiderstände 24,24a, die dafür da sind, dass sich an den Elektroden der Messsonde, sprich der Messelektrode 5 und der Guardelektrode 6, kein Gleichspannungspotential aufbauen kann. Die Diodenschaltung 25 dient dabei dem ESD-Schutz und ist mit einer Masseverbindung 26 verbunden. Die Ableitwiderstände in der gezeigten Konfiguration weisen jedoch auch parasitäre Kapazitäten auf, welche sich negative auf die erreichbare Messauflösung auswirken.

Deswegen wird die ESD-Schutzschaltung 20 erfindungsgemäß entsprechend der Fig. 7b modifiziert. Die Ableitwiderstände 24,24a für die Messelektrode 1 werden auf die Guardelektrode 6 geführt, damit die parasitären Kapazitäten der Ableitwiderstände 24,24a keinen Einfluss auf die Auswertung der von der Messsonde 1 erzeugten Antwortsignale und somit auf die Überwachung des Füllstandes haben. Auch die modifizierte Konfiguration verhindert das Aufbauen eines Gleichspannungspotentials, da dieses über die Guardelektrode 6 aufgebaut werden kann. Auch die Diodenschaltung 25 ist mit der Guardelektrode 6 verbunden um einen Einfluss durch parasitäre Kapazitäten auf die Messung zu verhindern.

### Bezugszeichen

- 1: Messsonde
- 2: Behälter
- 3: Medium
- 4: Bewandung des Behälters
- 5: Messelektrode
- 6: Guardelektrode
- 7: Elektronikeinheit
- 8: Mikrocontroller
- 9: Bereich zur Erzeugung des Erregersignals
- 10: Bereich zur Auswertung der von den jeweiligen Teilsignalen abhängigen Antwortsignale
- 11 11a: Spannungsteiler
- 12 12a: Port-Ausgänge
- 13: Block A, Integrationsverstärker
- 14: Block B, nicht invertierender Verstärker
- 15: Analog-Digital-Wandler (ADC)
- 16: Block C, nicht invertierender Verstärker
- 17: Messwiderstand
- 18: Block D, Differenzverstärker
- 19 19a 19b 19c: Entkoppelungskondensatoren
- 20: ESD-Schutzschaltung
- 21: Erstes konduktives Teilsignal
- 22: zweites konduktives Teilsignal
- 23: kapazitives Teilsignal
- 24 24a: Ableitwiderstände
- 25: Diodenschaltung
- 26: Masseverbindung

## Patentansprüche

1. Verfahren zur Überwachung eines vorgegebenen Füllstandes eines Mediums (3) in einem Behälter (2) mit zumindest einer aus einer Sensorelektrode (5) und einer Guardelektrode (6) zusammengesetzten Messsonde (1) und einer einzigen Elektronikeinheit (7), in welcher Elektronikeinheit (7) eine kapazitive und eine konduktive Messung zusammengeführt werden, wobei die Messsonde (1) abwechselnd im konduktiven und im kapazitiven Betriebsmodus betrieben wird,
wobei die Messsonde (1) mit einem Erregersignal beaufschlagt wird, welches Erregersignal aus zwei verschiedenen zeitlich abwechselnd aufeinanderfolgenden periodischen Teilsignalen zusammengesetzt wird, wobei in einem ersten Zeitintervall das erste periodische Teilsignal für den konduktiven Betriebsmodus und in einem zweiten Zeitintervall das zweite periodische Teilsignal für den kapazitiven Betriebsmodus generiert wird,
wobei aus dem von der Messsonde (1) erhaltenen vom aktuellen Teilsignal abhängigen Antwortsignal gemäß dem kapazitiven oder konduktiven Betriebsmodus ermittelt wird, ob der vorgegebene Füllstand erreicht ist,
wobei eine Meldung bei Über- oder Unterschreiten dieses Füllstandes generiert wird, wobei für das Erregersignal im ersten Zeitintervall ein Rechtecksignal verwendet wird und im zweiten Zeitintervall ein Dreiecksignal,
wobei im konduktiven Betriebsmodus das Verhältnis aus dem Strom durch die Sondenelektrode (5) und dem Strom durch die Guardelektrode (6) bestimmt wird, und wobei im kapazitiven Betriebsmodus die Differenz der Spannungen an der Sondenelektrode (5) und der Guardelektrode (6) bestimmt wird.

2. Verfahren nach Anspruch 1,
wobei das Rechtecksignal und das Dreiecksignal so dimensioniert werden, dass sie denselben arithmetischen Mittelwert aufweisen.

3. Verfahren nach einem der vorhergehenden Ansprüche,
wobei aus mindestens einem Antwortsignal mindestens eine medienspezifische Eigenschaft, insbesondere die elektrische Leitfähigkeit oder Dielektrizitätskonstante, ermittelt wird.

4. Verfahren nach einem der vorhergehenden Ansprüche,
wobei bei nicht oder geringfügig elektrisch leitfähigen Medien (3) die während der Verwendung des kapazitiven Betriebsmodus aufgenommen Antwortsignale ausgewertet werden, wobei bei elektrisch leitfähigen Medien (3) die während der Verwendung des konduktiven Betriebsmodus aufgenommenen Messsignale ausgewertet werden, wobei für Medien (3) mit einer Leitfähigkeit innerhalb eines Übergangsbereiches die Antwortsignale beider Betriebsmodi ausgewertet werden, und wobei die aus den Antwortsignalen gewonnenen Messwerte in Abhängigkeit von der Leitfähigkeit des Mediums mit entsprechenden Gewichtungsfaktoren versehen werden.

5. Vorrichtung zur Überwachung eines vorgegebenen Füllstandes eines Mediums (3) in einem Behälter (2),
mit zumindest einer aus einer Sensorelektrode (5) und einer Guardelektrode (6) zusammengesetzten Messsonde (1) und einer Elektronikeinheit (7), welche Elektronikeinheit zur Durchführung eines Verfahrens nach einem der Ansprüche 1-4 ausgestaltet ist.

6. Vorrichtung nach Anspruch 5, wobei mindestens ein Messwiderstand (17) vorgesehen ist, über den im konduktiven Betriebsmodus das Verhältnis aus dem Strom durch die Sondenelektrode (5) und dem Strom durch die Guardelektrode (6) bestimmt wird.

7. Vorrichtung nach mindestens einem der Ansprüche 5 oder 6,
wobei für die Generierung des ersten Teilsignals im konduktiven Betriebsmodus mindestens ein Spannungsteiler (11,11a) vorgesehen ist.

8. Vorrichtung nach mindestens einem der Ansprüche 5-7,
wobei mindestens ein Differenzverstärker (18) vorgesehen ist, mit dem im kapazitiven Betriebsmodus über den Messwiderstand (17) die Differenz der Spannungen an der Sondenelektrode (5) und der Guardelektrode (6) bestimmt wird.

9. Vorrichtung nach mindestens einem der Ansprüche 5-8,
wobei zumindest ein Operationsverstärker (16,18), insbesondere ein Operationsverstärker, durch den das im kapazitiven Betriebsmodus gemessene Antwortsignal geführt ist, mit einem Eingang mit einer geringen Eingangskapazität vorgesehen ist.

10. Vorrichtung nach mindestens einem der Ansprüche 5-9,
wobei eine ESD-Schutzschaltung (20) vorgesehen ist, umfassend zumindest eine Diodenschaltung (25) und einen Ableitwiderstand (24,24a), wobei die mindestens eine Diodenschaltung (25) und der mindestens eine Ableitwiderstand (24,24a) mit der Guardelektrode (6) und über die Guardelektrode (6) mit der Masseverbindung (26) verbunden sind.

11. Vorrichtung nach mindestens einem der Ansprüche 5-10,
wobei mindestens eine in der Elektronikeinheit integrierte Leiterplatte mit der Guardspannung geschirmt ist.

12. Vorrichtung nach mindestens einem der Ansprüche 5-11,
wobei die Messsonde so ausgestaltet ist, dass sie nach dem Einbau in den Behälter in einem dem Medium zugewandten Bereich im Wesentlichen mit der Bewandung des Behälters (4) abschließt oder zumindest teilweise in den Behälter (4) hineinragt.

## Claims

1. Procedure for monitoring a predefined level of a medium (3) in a vessel (2) with at least a measuring probe (1) consisting of a sensor electrode (5) and a guard electrode (6), and with a single electronic unit (7), wherein a capacitive measurement and a conductive measurement are combined in said electronic unit (7),
wherein the measuring probe (1) is operated alternately in the conductive and capacitive operating mode
wherein the measuring probe (1) is exposed to an excitation signal, wherein said excitation signal consists of two different consecutive periodic sub-signals which alternate over time, wherein the first periodic sub-signal for the conductive operating mode is generated in a first time interval, and the second periodic sub-signal for the capacitive operating mode is generated in a second time interval,
wherein the response signal, which is received from the measuring probe (1) and is dependent on the current sub-signal, is used to determine - according to the capacitive or conductive operating mode - whether the specified level is reached,
wherein a message is generated if this level is exceeded or undershot,
wherein a rectangular signal is used for the excitation signal in the first time interval, and a triangular signal is used in the second time interval,
wherein the ratio of the current through the sensor electrode (5) to the current through the guard electrode (6) is determined in the conductive operating mode, and
wherein the difference between the voltages at the probe electrode (5) and the guard electrode (6) is determined in the capacitance operating mode.

2. Procedure as claimed in Claim 1,
wherein the rectangular signal and the triangular signal are such that they have the same arithmetic mean.

3. Procedure as claimed in one of the previous claims,
wherein at least one medium-specific property, particularly the electrical conductivity or the dielectric constant, is determined from at least a response signal.

4. Procedure as claimed in one of the previous claims,
wherein, in the case of non-electrically conductive or slightly electrically conductive media (3), the response signals recorded during the use of the capacitance operating mode are evaluated and, in the case of electrically conductive media (3) the measuring signals recorded during the use of the conductive operating mode are evaluated,
wherein the response signals of both operating modes are evaluated for media with a conductivity within a transition range, and wherein the measured values obtained from the response signals are assigned corresponding weighting factors depending on the conductivity of the medium.

5. Apparatus designed to monitor a predefined level of a medium (3) in a vessel (2), with at least one measuring probe (1) consisting of a sensor electrode (5) and a guard electrode (6) and an electronic unit (7), said electronic unit being equipped to carry out a procedure as claimed in one of the Claims 1 to 4.

6. Apparatus as claimed in Claim 5,
wherein at least a measuring resistor (17) is provided via which the ratio of the current through the sensor electrode (5) to the current through the guard electrode (6) is determined in the conductive operating mode.

7. Apparatus as claimed in at least one of the Claims 5 or 6,
wherein at least one voltage divider (11, 11a) is provided for the generation of the first sub-signal in the conductive operating mode.

8. Apparatus as claimed in at least one of the Claims 5 to 7,
wherein at least one differential amplifier (18) is provided with which the difference of the voltages at the sensor electrode (5) and the guard electrode (6) are determined via the measuring resistor (17) in the capacitance operating mode.

9. Apparatus as claimed in at least one of the Claims 5 to 8,
wherein at least an operational amplifier (16, 18), particularly an operational amplifier through which the response signal measured in the capacitance operating mode is guided, is provided with an input with a low input capacity.

10. Apparatus as claimed in at least one of the Claims 5 to 9,
wherein an ESD protection circuit (20) is provided, comprising at least a diode circuit (25) and a bleeder resistor (24, 24a), wherein the at least one diode circuit (25) and the at least one bleeder resistor (24, 24a) are connected to the guard electrode (6) and, via the guard electrode (6), to the ground connection (26).

11. Apparatus as claimed in at least one of the Claims 5 to 10,
wherein at least a printed circuit board integrated in the electronic unit is shielded with the guard voltage.

12. Apparatus as claimed in at least one of the Claims 5 to 11,
wherein the measuring probe is designed in such a way that, following installation in the vessel, it is essentially flush with the vessel wall (4) in a zone facing towards the medium, or at least partially projects into the vessel (4).

## Revendications

1. Procédé destiné à la surveillance d'un niveau prédéfini d'un produit (3) dans un réservoir (2) avec au moins une sonde de mesure (1) constituée d'une électrode de sonde (5) et d'une électrode de garde (6), et avec une unique unité électronique (7), unité électronique (7) dans laquelle sont réunies une mesure capacitive et une mesure conductive,
la sonde de mesure (1) étant alimentée avec un signal d'excitation, lequel signal d'excitation est composé de deux signaux partiels périodiques différents alternant dans le temps, le premier signal partiel périodique étant généré, dans un premier intervalle de temps, pour le mode de fonctionnement conducteur et le deuxième signal partiel périodique étant généré, dans un deuxième intervalle de temps, pour le mode de fonctionnement capacitif,
procédé pour lequel il est déterminé - selon le mode de fonctionnement capacitif ou conductif, à partir du signal de réponse reçu de la sonde de mesure (1), lequel signal dépend du signal partiel actuel - si le niveau prédéterminé a été atteint,
un message étant généré en cas de dépassement par excès ou par défaut de ce niveau,
un signal rectangulaire étant utilisé pour le signal d'excitation dans le premier intervalle de temps, et un signal triangulaire dans le deuxième intervalle de temps,
le rapport entre le courant traversant l'électrode de sonde (5) et le courant traversant l'électrode de garde (6) étant déterminé dans le mode de fonctionnement conductif, et
la différence des tensions sur l'électrode de sonde (5) et l'électrode de garde (6) étant déterminée dans le mode de fonctionnement capacitif.

2. Procédé selon la revendication 1,
pour lequel le signal rectangulaire et le signal triangulaire sont dimensionnés de telle sorte qu'ils présentent la même moyenne arithmétique.

3. Procédé selon l'une des revendications précédentes,
pour lequel est déterminée, à partir d'au moins un signal de réponse, une caractéristique spécifique au produit, notamment la conductivité électrique ou la constante diélectrique.

4. Procédé selon l'une des revendications précédentes,
pour lequel, dans le cas de produits (3) non ou faiblement électriquement conducteurs, ce sont les signaux de réponse enregistrés pendant l'utilisation du mode de fonctionnement capacitif qui sont évalués et, dans le cas de produits (3) électriquement conducteurs, ce sont les signaux de mesure enregistrés pendant l'utilisation du mode de fonctionnement conductif qui sont évalués,
cependant, concernant les produits (3) présentant une conductivité dans une zone de transition, ce sont les signaux de réponse des deux modes de fonctionnement qui sont évalués, et les valeurs mesurées obtenues à partir des signaux de réponse étant munies de facteurs de pondération en fonction de la conductivité du produit.

5. Dispositif destiné à la surveillance d'un niveau prédéfini d'un produit (3) dans un réservoir (2),
avec au moins une sonde de mesure (1) constituée d'une électrode de sonde (5) et d'une électrode de garde (6) et une unité électronique (7), laquelle unité électronique est conçue pour la réalisation d'un procédé selon l'une des revendications 1 à 4.

6. Dispositif selon la revendication 5,
pour lequel est prévue au moins une résistance de mesure (17), à travers laquelle le rapport entre le courant traversant l'électrode de sonde (5) et le courant traversant l'électrode de garde (6) est déterminé dans le mode de fonctionnement conductif.

7. Dispositif selon au moins l'une des revendications 5 ou 6,
pour lequel est prévu au moins un diviseur de tension (11, 11a) pour la génération du premier signal partiel dans le mode de fonctionnement conductif.

8. Dispositif selon au moins l'une des revendications 5 à 7,
pour lequel est prévu au moins un amplificateur différentiel (18), avec lequel est déterminée, dans le mode de fonctionnement capacitif, à travers la résistance de mesure (17), la différence des tensions sur l'électrode de sonde (5) et l'électrode de garde (6).

9. Dispositif selon au moins l'une des revendications 5 à 8,
pour lequel est prévu au moins un amplificateur opérationnel (16, 18), notamment un amplificateur opérationnel à travers lequel le signal de réponse mesuré dans le mode de fonctionnement capacitif est acheminé, lequel amplificateur présente une entrée avec une capacité d'entrée faible.

10. Dispositif selon au moins l'une des revendications 5 à 9,
pour lequel est prévu un circuit de protection ESD (20) comprenant au moins un circuit à diodes (25) et une résistance de fuite (24, 24a), l'au moins un circuit à diodes (25) et l'au moins une résistance de fuite (24, 24a) étant reliés avec l'électrode de garde (6) et, par l'intermédiaire de l'électrode de garde (6), à la connexion de masse (26).

11. Dispositif selon au moins l'une des revendications 5 à 10,
pour lequel au moins une carte de circuit imprimé intégrée dans l'unité électronique est blindée avec la tension de garde.

12. Dispositif selon au moins l'une des revendications 5 à 11,
pour lequel la sonde de mesure est conçue de telle sorte qu'après le montage dans le réservoir, elle est pour l'essentiel disposée à ras de la paroi du réservoir (4), dans une zone tournée vers le produit, ou fait saillie au moins partiellement dans le réservoir (4).
